# EUROPÄISCHE PATENTANMELDUNG

(11) **EP 4 564 738 A1**
(43) Veröffentlichungstag der Anmeldung: **04.06.2025**
(21) Anmeldenummer: 23212756.3
(22) Anmeldetag: 28.11.2023
(51) Int. Cl.: H04L 9/40

(54) **FILTERN EINES NETZWERKVERKEHRS BASIEREND AUF EINEM KONFORMITÄTSSTATUS EINES KOMMUNIKATIONSENDPUNKTS**

(71) Anmelder: Siemens Aktiengesellschaft, 80333 München (DE)
(72) Erfinder: Aschauer, Hans, 81829 München (DE); Becker, Stefan, 91325 Adelsdorf (DE); Falk, Rainer, 85435 Erding (DE); Feist, Christian Peter, 80689 München (DE); Frank, Reinhard, 81369 München (DE); Laurig, Frank, 92369 Sengenthal (DE); Palmin, Anna, 76187 Karlsruhe (DE)
(74) Vertreter: Siemens Patent Attorneys

(57) **Zusammenfassung**

Die Erfindung betrifft ein Verfahren zum Bereitstellen mindestens einer Filterregel (aFR) für ein Filtern eines Netzwerkverkehrs zwischen mindestens einem ersten Knoten (1) und mindestens einem zweiten Knoten (2) einer Kommunikationsverbindung,
mit den Schritten:
- Ein Heranziehen (S2) mindestens eines Konformitätsstatus des ersten Knotens (1) und/oder des zweiten Knotens (2),
- ein Festlegen (S3) der mindestens einer Filterregel (aFR) basierend auf dem mindestens einem Konformitätsstatus, wobei das Festlegen (S3) der mindestens einen Filterregel (aFR) umfasst:
o Ein Anpassen (S3a) mindestens einer bestehenden Filterregel (FR),
und
- das Bereitstellen (S4) der mindestens einen Filterregel (aFR).

Außerdem betrifft die Erfindung ein Computerprogrammprodukt, eine Komponente und ein übergeordnetes System.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die Erfindung betrifft ein Verfahren zum Bereitstellen mindestens einer Filterregel. Außerdem betrifft die Erfindung ein Computerprogrammprodukt, eine Komponente für ein Netzwerk und ein übergeordnetes System.

### Beschreibung des Stands der Technik

Es sind Netzwerkgeräte (Firewall, Router, Switch) zum Weiterleiten von Netzwerkpaketen und zum Filtern von Netzwerkpaketen auf einem Übertragungspfad zwischen Endpunkten einer Ende-zu-Ende-Kommunikationsverbindung (z.B. TCP, UDP, QUIC, OPC UA, HTTP, MQTT, GOOSE/SV/MMS/GSSE nach IEC61850) bekannt. Ziel des Filterns der Netzwerkpaketen ist es u.a. zu vermeiden, dass eine Netzwerkpaket, das eine potenzielle Gefahr darstellt, den Empfänger-Endpunkt erreicht. Um Sicherheitsrisiken zu minimieren, müssen Netzwerkgeräte und Filter fortlaufend verbessert und weiterentwickelt werden.

Es ist bekannt, dass auf einem Endgerät (PC, Notebook) eine Endpoint-Security-Anwendung installiert werden kann, die den Netzwerkverkehr auf dem Endpunkt filtert.

Unabhängig davon ist bekannt, dass auf einem Endgerät (PC, Notebook) eine Endpoint-Security-Anwendung installiert werden kann, die den Compliance-Status, auch Konformitätsstatus, des Endpunkts prüft. Ein fehlgeschlagener Compliance-Check führt im Stand der Technik zu einer Remediation.

Von VPN-Lösungen wie z.B. Zscaler ist bekannt, dass der VPN-Endpunkt (Zscaler-Server) den Compliance-Status des zugreifenden Endgeräts prüft und davon abhängig den Aufbau eines VPNs zum Zugriff auf Ressourcen zulässt oder abweist.

Es ist bekannt, dass ein Gerätemanagementsystem einen Geräte-Compliance-Status verwalten kann. Ein als nicht compliant erkanntes Gerät kann unterschiedlich behandelt werden, mögliche Aktionen umfassen, u.a.: Versandt einer E-Mail oder Push-Notification; ein Kennzeichnen des Geräts als nicht-compliant in einem Geräteverzeichnisdienst; ein remote Lock; Retire (d.h. Firmendaten auf Gerät löschen).

Weiterhin ist bekannt, dass der Geräte-Compliance-Status bei Zugriffskontrollentscheidungen auf einem Zielsystem geprüft werden kann.

Die Aufgabe der Erfindung besteht darin, eine Lösung für ein verbessertes Filtern von Daten innerhalb einer Kommunikationsverbindung bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Bereitstellen mindestens einer Filterregel für ein Filtern eines Netzwerkverkehrs zwischen mindestens einem ersten Knoten und mindestens einem zweiten Knoten einer Kommunikationsverbindung, mit den Schritten:
- Ein Heranziehen mindestens eines Konformitätsstatus (auch als "Compliance Status" bezeichenbar) des ersten Knotens und/oder des zweiten Knotens,
- ein Festlegen der mindestens einer Filterregel basierend auf (auch zu verstehen als "abhängig von") dem mindestens einem Konformitätsstatus, wobei das Festlegen der mindestens einen Filterregel umfasst:
   o Ein Anpassen (auch als ein Aktualisieren bezeichenbar) mindestens einer bestehenden Filterregel, und
- das Bereitstellen der mindestens einen Filterregel.

Erfindungsgemäß erfolgt das Bereitstellen der mindestens einen Filterregel abhängig von mindestens einem Konformitätsstatus des ersten Knotens und/oder des zweiten Knotens, insbesondere zumindest eines Kommunikationsendpunkts. Dazu wird der Konformitätsstatus des zumindest einen Kommunikationsendpunkts herangezogen und davon abhängig wird die mindestens eine Filterregel zum Filtern des Netzwerkverkehrs festgelegt.

Die mindestens eine bestehende Filterregel ist als mindestens eine frühere Filterregel zu betrachten, die bereits existiert. Insbesondere ist sie mindestens eine administrativ zuvor eingerichtete Filterregel. Insbesondere ist die mindestens eine bestehende Filterregel außerdem als eine durch einen vorrangegangenen Ablauf des erfindungsgemäßen Verfahrens festgelegte Filterregel ausgebildet. Dies ist von Vorteil, wenn sich der mindestens eine Konformitätsstatus ändert und das erfindungsgemäße Verfahren erneut ausgeführt wird.

Durch das Festlegen der mindestens einen Filterregel wird die mindestens eine bestehende Filterregel insbesondere gelöscht und/oder überschrieben.

Der mindestens eine erste Knoten und/oder der mindestens eine zweite Knoten sind insbesondere ausgebildet als ein erster und ein zweiter Endpunkt einer Ende-zu-Ende-Kommunikationsverbindung, d.h. ein erster und ein zweiter Kommunikationsendpunkt.

Der mindestens eine erste Knoten und/oder der mindestens eine zweite Knoten sind insbesondere ausgebildet als:
- ein Internet-of-Things-Gerät,
- ein Steuergerät,
- ein Automatisierungsgerät, und/oder
- eine Produktionszelle.

Bei einem Zero-Trust-Security-Ansatz nach dem bisherigen Stand der Technik wird jeder Zugriff durch das Zielsystem überprüft. Neben der Authentisierung des zugreifenden Nutzers kann auch eine Überprüfung von Kontextinformation erfolgen. Insbesondere kann der Compliance-Status des vom Nutzer verwendeten zugreifenden Geräts überprüft werden, d.h. ob es entsprechend der definierten Vorgaben konfiguriert ist.

Ein Überprüfen des Compliance-Statuses erfordert nach dem bisherigem Stand der Technik jedoch, die Fähigkeit des Zielsystems den Compliance-Status des Geräts zu prüfen und dass das Zielsystem über eine Zugriffsmöglichkeit auf die Compliance-Information des Geräts verfügt. Dies kann jedoch in der Praxis nicht immer der Fall sein, insbesondere wenn das Zielsystem ein Bestandssystem (Brownfield-System) ist, das diese Kontextprüfung nicht unterstützt, oder wenn sich das Zielsystem in einem anderen Administrationsbereich befindet, für den der Compliance-Status des Geräts nicht abfragbar ist, insbesondere da keine Zugriffsmöglichkeit auf das Gerätemanagementsystem bzw. auf den Geräteverzeichnisdienst des Geräts besteht.

Die Erfindung bietet hinsichtlich der geschilderten Probleme des bisherigen Stands der Technik u.a. den Vorteil, dass eine bei einer Zero-Trust-Security-Strategie übliche Geräte-Compliance-Prüfung bei Bestandssystemen (auch als "Brownfield-Systems" bezeichenbar) umsetzbar ist.

Kommunikationsendpunkte, die nicht den Vorgaben entsprechen, d.h. nicht konform (auch "nicht compliant") sind, können über die festgelegte Filterregel (und die umsetzende Komponente des Netzwerks, insbesondere Firewall) nicht oder nur noch eingeschränkt kommunizieren. Daten von einem nicht den Vorgaben entsprechenden Knoten/Gerät werden nicht erst vom Kommunikationsendpunkt abgewiesen, sondern sie werden (zumindest teilweise) schon früher entlang des Kommunikationsverbindung (auch Netzwerk-Übertragungspfad) geblockt. Dadurch besteht nur eine eingeschränkte Möglichkeit, dass der betroffene Kommunikationsendpunkt andere Geräte angreifen kann oder Denialof-Service-Angriffe durchführen kann. Außerdem wird eine Beeinträchtigung einer Echtzeit-Datenübertragung anderer Geräte vermieden.

Weiterhin kann die Geräte-Compliance-Prüfung (das Ermitteln des mindestens einen Konformitätsstatus) zeitlich entkoppelt von einem konkreten Zugriff, d.h. von einem Verbindungsaufbau, erfolgen. Dies hat den Vorteil, dass der Verbindungsaufbau nicht durch Zero-Trust-Berechtigungsprüfungen verzögert wird.

Weiterhin können Kommunikationsprotokolle für die Kommunikationsverbindung direkt weitergenutzt werden, d.h. ohne Protokollanpassung und auch ohne sie über ein VPN zu tunneln. Daher kann dieser Ansatz auch bei echtzeitkritischer Kommunikation angewandt werden.

Die Kommunikationsverbindung ist insbesondere ausgebildet als:
- Eine Ende-zu-Ende-Kommunikationsverbindung (z.B. TCP, UDP, QUIC, OPC UA, HTTP, MQTT, GOOSE/SV/MMS/GSSE nach IEC61850),
- eine Echtzeitkommunikationsverbindung,
- eine Unicast-Verbindung,
- eine Multicast-Verbindung, und/oder
- eine Gruppenverbindung.

Eine Echtzeitkommunikationsverbindung kann beispielsweise eine TSN-Echtzeitkommunikationsverbindung (TSN: Time Sensitive Networking"), eine DetNet-Echtzeitkommunikationsverbindung (DetNet: "Deterministic Networking"), eine Profinet-Echtzeitkommunikationsverbindung, eine Profibus-Echtzeitkommunikationsverbindung, eine TSC-Echtzeitkommunikationsverbindung (TSC: "time-sensitive communications") oder eine URLLC- Echtzeitkommunikationsverbindung (URLLC: "Ultra-Reliable Low Latency Communication") sein.

Erfindungsgemäß erfolgt das Festlegen der mindestens einen Filterregel basierend auf dem mindestens einen Konformitätsstatus des ersten Knotens und/oder des zweiten Knotens. Bei einer Unicast-Übertagung wird insbesondere der Compliance-Status einer des beiden Kommunikationsendpunkte oder beider Kommunikationsendpunkte berücksichtig. Bei einer Multicast-Übertragung oder bei einer Gruppenkommunikation wird insbesondere der Compliance-Status eines Kommunikationsendpunkts, einer Teilmenge der Kommunikationsendpunkte oder aller Kommunikationsendpunkte der Multicast-Übertragung bzw. der Gruppe von Kommunikationsendpunkten berücksichtigt.

In einer weiteren Variante wird außerdem ein Compliance-Status weiterer Netzwerkgeräte der Kommunikationsverbindung berücksichtigt. Dies ist vorteilhaft, wenn eine Mehrzahl oder Vielzahl von Komponenten (insbesondere Paketfiltern und/oder Firewalls) für ein Filtern des Netzwerkverkehrs unter Anwendung der mindestens einen Filterregel vorgesehen ist.

In einer Weiterbildung der Erfindung umfasst das erfindungsgemäße Verfahren die weiteren Schritte:
- Ein Ermitteln des mindestens einen Konformitätsstatus,
- ein Speichern (auch als ein Hinterlegen bezeichenbar) des mindestens einen Konformitätsstatus (insbesondere in einer Liste umfassend den mindestens einen ersten Knoten und/oder den mindestens einen zweiten Knoten, jeweils mit dem zugehörigen mindestens einen Konformitätsstatus), und/oder
- ein Abrufen des mindestens einen Konformitätsstatus.

Die Schritte dieser Ausführungsform gehen insbesondere dem erfindungsgemäßen Heranziehen des von mindestens einen Konformitätsstatus voran.

Das Ermitteln des mindestens einen Konformitätsstatus erfolgt nach einer Ausführungsform bei einem Verbindungsaufbau zwischen dem mindestens einem ersten Knoten und dem mindestens einem zweiten Knoten der Kommunikationsverbindung.

Vorzugsweise erfolgt das Ermitteln des mindestens einen Konformitätsstatus jedoch bereits vorab basierend auf einer Liste umfassend die Kommunikationsendpunkte, d.h. umfassend den mindestens einen ersten Knoten und/oder den mindestens einen zweiten Knoten. So wird insbesondere periodisch, insbesondere täglich oder stündlich, der Compliance Status der in der Liste enthaltenen Kommunikationsendpunkte ermittelt und davon abhängig die mindestens eine Filterregeln festgelegt, insbesondere durch ein Anpassen einer bestehenden Filterregel, insbesondere einer administrativ zuvor eingerichteten Filterregel. In einer Variante erfolgt das Ermitteln des mindestens einen Konformitätsstatus wiederholt, abhängig von einem Betriebsstatus zumindest einer Produktionseinrichtung wie beispielsweise einem Roboter oder einer Werkzeugmaschine. Dies hat den Vorteil, dass die Ermittlung des Konformitätsstatus während eines unkritischen Produktionsphase erfolgen kann, sodass der Produktionsvorgang nicht beeinflusst oder beeinträchtigt wird. Weiterhin ist es möglich, dass die Filterregel während einer unkritischen Produktionsphase bereitgestellt wird und/oder nur während einer unkritischen Produktionsphase festgelegt wird. Dies hat den Vorteil, dass während einer kritischen Produktionsphase keine geänderte, modifizierte oder aktualisierte Filterregel festgelegt wird.

Die Liste der Kommunikationsendpunkte ist insbesondere administrativ vorgegeben, d.h. konfiguriert beziehungsweise projektiert. Weiterhin ist es möglich, dass die Liste der Kommunikationsendpunkte basierend auf einer bestehenden Filterregel, insbesondere einer administrativ zuvor eingerichteten Filterregel, ermittelt wird. Weiterhin ist es möglich, dass die Liste der Kommunikationsendpunkte basierend auf zurückliegend erfolgten Netzwerkverkehr (d.h. Datenübertragungen), insbesondere durch ein vorheriges Anlernen z.B. mittels einer künstlichen Intelligenz, automatisch ermittelt wird.

In einer weiteren Weiterbildung der Erfindung basiert das Ermitteln des mindestens einen Konformitätsstatus auf:
- Einem Abrufen mindestens eines Verzeichniseintrags bezüglich des mindestens einen Konformitätsstatus, insbesondere von einem Gerätemanagementsystem oder von eines Geräte-Verzeichnisdienst, für den mindestens einen ersten Knoten und/oder den mindestens einen zweiten Knoten,
- mindestens einer Integritätsattestierung des mindestens einen ersten Knotens und/oder des mindestens einen zweiten Knotens, und/oder
- mindestens einem Fingerabdruck des mindestens einen ersten Knotens und/oder des mindestens einen zweiten Knotens, wobei der mindestens eine Fingerabdruck insbesondere durch ein Scannen (Scannen der Kommunikationsverbindung) des ersten Knoten und/oder des zweiten Knotens ermittelt wurde.

In einer weiteren Weiterbildung der Erfindung umfasst das erfindungsgemäße Verfahren die weiteren Schritte:
- Ein Heranziehen der mindestens einen Filterregel, und
- ein Filtern des Netzwerkverkehrs zwischen dem ersten Knoten und dem zweiten Knoten der Kommunikationsverbindung unter Anwendung (auch als "basierend auf" zu verstehen) der mindestens einen Filterregel.

Die Schritte dieser Ausführungsform folgen insbesondere dem erfindungsgemäßen Bereitstellen der mindestens einen Filterregel.

In einer weiteren Weiterbildung der Erfindung geht dem Heranziehen des mindestens einen Konformitätsstatus voraus:
- ein Heranziehen einer Benachrichtigung bezüglich einer Änderung von mindestens einem früheren Konformitätsstatus des ersten Knoten und/oder des zweiten Knotens.

Die Änderung des mindestens einem früheren Konformitätsstatus stößt damit das erfindungsgemäße Heranziehen des mindestens einen Konformitätsstatus und damit wiederum das folgende Festlegen der mindestens einen Filterregel an. Nach dieser Ausführungsform wird die Benachrichtigung bezüglich der Änderung des mindestens einen früheren Konformitätsstatus des ersten Knoten und/oder des zweiten Knotens für das Festlegen der mindestens einen Filterregel herangezogen. Dazu stellt insbesondere eine Gerätemanagementeinheit (auch ein Device-Management-System) oder ein Geräte-Verzeichnisdienst bei einer festgestellten Änderung des Compliance-Status des ersten Knoten und/oder des zweiten Knotens eine Push-Nachricht an die das erfindungsgemäße Verfahren ausführende Einheit bereit, um das Festlegen der mindestens einen Filterregel (oder insbesondere ein Anpassen/ein Aktualisieren einer bestehenden Filterregel) anzustoßen.

Die Änderung des mindestens einem früheren Konformitätsstatus des ersten Knoten und/oder des zweiten Knotens ist insbesondere ausgebildet als ein Löschen und/oder ein Überschreiben des früheren Konformitätsstatus des ersten Knoten und/oder des zweiten Knotens. Die Änderung des mindestens einen früheren Konformitätsstatus resultiert in einem Ermitteln des mindestens einen Konformitätsstatus, welcher erfindungsgemäß herangezogen wird, um darauf basierend die mindestens eine Filterregel festzulegen.

In einer weiteren Weiterbildung der Erfindung umfasst das Festlegen der mindestens einen Filterregel außerdem:
- Ein Festlegen einer Überwachungsintensität (auch als Überwachungstiefe bezeichenbar) der Kommunikationsverbindung durch die mindestens eine Filterregel.

Durch das Festlegen einer Überwachungsintensität, auch Überwachungstiefe, der Kommunikationsverbindung ist es möglich, die mindestens eine Filterregel für betroffene Netzwerkverkehr so festzulegen, insbesondere anzupassen, dass jener Netzwerkverkehr einer intensiveren Überwachung unterzogen wird. Dies ist insbesondere dadurch umgesetzt, dass abhängig vom Compliance-Status eine Überwachungseinheit aus mehreren Überwachungseinheiten mit jeweils unterschiedlich tiefen Überwachungen ausgewählt wird, zu der der betroffene Netzwerkverkehr geleitet wird.

In einer weiteren Weiterbildung der Erfindung weist der Netzwerkverkehr auf:
- mindestens ein Netzwerkpaket,
- mindestens ein Datenpaket,
- mindestens ein IP-Paket, und/oder
- mindestens einen Ethernet-Frame,
jeweils auch als Element des Netzwerkverkehrs bezeichenbar.

Die mindestens eine Filterregel für das Filtern des Netzwerkverkehrs ist somit vorgesehen für ein Filtern von den Elementen des Netzwerkverkehrs nach dieser Ausführungsform.

In einer weiteren Weiterbildung der Erfindung gibt die mindestens eine Filterregel:
- Eine Blockade,
- ein Weiterleiten,
- ein Umleiten, (auch als ein Auszuleiten bezeichenbar, insbesondere zu einem Mirror-Port), und/oder
- ein Zuordnen zu einer Warteschlange (insbesondere für ein Quality-of-Service-aware Scheduling, z.B. für eine Echtzeitdatenübertragung)
für zumindest einen Teil des Netzwerkverkehrs vor.

Das Umleiten wird insbesondere vorgegeben, um dem Umgeleiteten Netzwerkverkehr für eine spätere Analyse zu speichern ("full packet capture") und erfolgt insbesondere abhängig von dem Compliance-Status.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem eine Komponente für ein Netzwerk, insbesondere ein Netzwerkgerät und/oder eine Netzwerckomponente, aufweisend ein erfindungsgemäßes Computerprogrammprodukt, ausgebildet das Computerprogramm auszuführen. Die Komponente für das Netzwerk ist ausgebildet in dem Netzwerk betrieben zu werden.

In einer Weiterbildung der Erfindung ist die erfindungsgemäße "Komponente für das Netzwerk" ausgebildet als:
- eine Firewall, ein Paketfilter, ein Router und/oder ein Switch oder
- eine Verwaltungskomponente (auch als "Network Security Manager" bezeichenbar), ausgebildet eine "weitere Komponente für ein Netzwerk" zu verwalten. Die "weitere Komponente für ein Netzwerk" ist insbesondere ausgebildet als eine Firewall, ein Paketfilter, ein Router und/oder ein Switch.

Die Funktionalität zum Ermitteln des Geräte-Compliance-Status und zum Anpassen der Filterregeln ist somit entweder auf einer Komponente für das Netzwerk realisiert, welche auch für das Filtern ausgebildet ist: eine Firewall, ein Paketfilter und/oder ein Router.

Alternativ ist die Funktionalität zum Ermitteln des Geräte-Compliance-Status und zum Anpassen der Filterregeln in einer separaten Komponente für ein Netzwerk, welche ebenfalls in dem Netzwerk angeordnet ist, ausgebildet. Insbesondere in Form einer Verwaltungskomponente, welche die Funktionalität zum Ermitteln des Geräte-Compliance-Status und zum Anpassen der Filterregeln (z.B. über netconf/YANG oder restconf/YANG) übernimmt, nicht aber das Filtern des Netzwerkverkehrs an sich.

Die Erfindung umfasst außerdem ein übergeordnetes System, insbesondere eine industrielle Anlage,
aufweisend:
- Ein erstes Endgerät,
- ein zweites Endgerät,
- ein Netzwerk, und
- eine erfindungsgemäße Komponente für das Netzwerk.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens,
- Fig. 2: eine schematische Darstellung eines erfindungsgemäßen Systems und
- Fig. 3: eine schematische Darstellung einer erfindungsgemäßen Komponente für ein Netzwerk.

### DETAILLIERTE BESCHREIBUNG DER ERFINDUNG

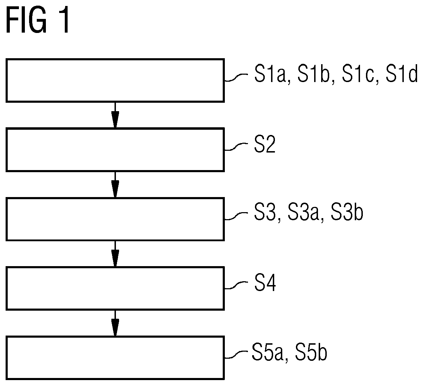

Fig. 1 zeigt ein Ablaufdiagramm des erfindungsgemäßen Verfahrens zum Bereitstellen mindestens einer Filterregel für ein Filtern eines Netzwerkverkehrs zwischen mindestens einem ersten Knoten und mindestens einem zweiten Knoten einer Kommunikationsverbindung, mit den Schritten:
- Schritt S1a: Optional, ein Heranziehen einer Benachrichtigung bezüglich einer Änderung von mindestens einem früheren Konformitätsstatus des ersten Knoten und/oder des zweiten Knotens, und/oder
- Schritt S1b: Optional, ein Ermitteln mindestens eines Konformitätsstatus, und/oder
- Schritt S1c: Optional, ein Speichern (auch als ein Hinterlegen bezeichenbar) des mindestens einen Konformitätsstatus (insbesondere in einer Liste umfassend den mindestens einen ersten Knoten und/oder den mindestens einen zweiten Knoten, jeweils mit dem zugehörigen mindestens einen Konformitätsstatus), und/oder
- Schritt S1d: Optional, ein Abrufen des mindestens einen Konformitätsstatus,
   und
- Schritt S2: Ein Heranziehen des mindestens Konformitätsstatus (auch als "Compliance Status" bezeichenbar) des ersten Knotens und/oder des zweiten Knotens,
   und
- Schritt S3: Ein Festlegen der mindestens einer Filterregel basierend auf (auch zu verstehen als "abhängig von") dem mindestens einem Konformitätsstatus,
   wobei das Festlegen der mindestens einen Filterregel umfasst:
   o Schritt S3a: Ein Anpassen (auch als ein Aktualisieren bezeichenbar) mindestens einer bestehenden Filterregel, und/oder
   o Schritt S3b: Optional, ein Festlegen einer Überwachungsintensität (auch als Überwachungstiefe bezeichenbar) der Kommunikationsverbindung durch die mindestens eine Filterregel,
      und
- Schritt S4: Das Bereitstellen der mindestens einen Filterregel,
und optional:
- Schritt S5a: Ein Heranziehen der mindestens einen Filterregel, und
- Schritt S5b: Ein Filtern des Netzwerkverkehrs zwischen dem ersten Knoten und dem zweiten Knoten der Kommunikationsverbindung unter Anwendung (auch als "basierend auf" zu verstehen) der mindestens einen Filterregel.

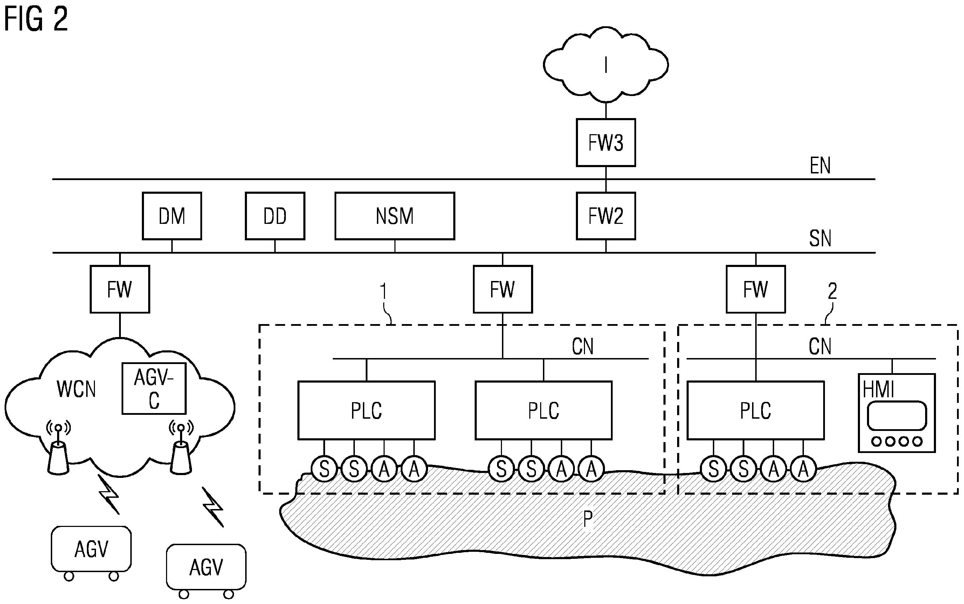

Fig. 2 zeigt eine schematische Darstellung eines erfindungsgemäßen Systems, insbesondere eines industriellen Automatisierungs- und Steuerungssystems.

Es sind zwei Produktionszellen 1, 2 mit:
- Jeweils zumindest einer speicherprogrammierbaren Steuerung PLC (auch als "programmable logic controller" PLC bezeichenbar),
- einer Mensch-Maschine-Schnittstelle HMI (auch als "Human-User-Interface-Panel" HMI bezeichenbar) in Produktionszelle 2, und
- jeweils einem Zellen-internen Steuerungsnetzwerk CN (auch als "Control network" CN bezeichenbar).

Die speicherprogrammierbaren Steuerungen PLC sind durch Sensoren S und Aktoren A mit der physischen realen Welt P verbunden.

Die zwei Produktionszellen 1, 2 sind jeweils über eine Firewall FW, z.B. einen Paketfilter, ein Security Gateway oder eine Applikations-Firewall, mit einem Fabriknetz SN (auch als "Shopfloor network" SN bezeichenbar) gekoppelt.

Weiterhin ist ein drahtloses Steuernetzwerk WCN (auch als "Wireless Control Network" bezeichenbar), z.B. basierend auf einer WLAN- oder 5G-Funkübertragung, vorgesehen, um insbesondere fahrerlose Transportsysteme AGV (auch als "automated guided vehicles" AGV bezeichenbar) durch ein AGV-Steuersystem AGV-C (auch als "AGV-Control" AGV-C bezeichenbar) zu steuern. Das Fabriknetz SN ist über eine zweite Firewall FW2 mit einem Firmennetzwerk EN (auch als "Enterprise network" EN bezeichenbar) gekoppelt, das wiederum über eine dritte Firewall FW3 mit dem Internet I verbunden ist.

Ein Gerätemanagement-System DM (auch als "Device Manager" DM bezeichenbar) kann den Compliance-Status der von ihm verwalteten Geräte bzw. der Produktionszellen 1, 2 ermitteln und den aktuellen Status in dem Geräteverzeichnisdienst DD (auch als "Device Directory Service" DD bezeichenbar) hinterlegen. Der Netzwerk-Security-Manager NSM realisiert hier die erfindungsgemäße Funktionalität, zumindest eine, vorzugsweise mehrere Filterregeln auf zumindest einer Firewall FW, FW2, FW3 abhängig von dem aktuellen Geräte-Compliance-Status anzupassen. Findet eine Anpassung einer oder mehrerer Filterregeln aufgrund einer Änderung eines Geräte-Compliance-Status statt, kann dieses Ereignis entsprechend geloggt und weitergeleitet werden. So lassen sich Anpassungen der Filterregeln nachträglich verfolgen (z.B. "durch Admin angepasst", "Anpassung aufgrund von Änderung in Geräte-Compliance-Status").

Diese Realisierungsvariante hat den Vorteil, dass vorhandene Firewalls FW FW2, FW3, soweit sie remote administrierbar sind, weiterverwendet werden können. Sie müssen lediglich eine Paketfilterung, z.B. abhängig von MAC-Adresse, IP-Adresse, Protokoll, Portnummer unterstützen. Dies hat weiterhin den Vorteil, dass eine Filterung mit äußerst hoher Performance realisierbar ist, da sie praktikabel in Hardware, z.B. auf einem FPGA oder ASIC oder auf einem Netzwerkadapter, realisiert werden kann.

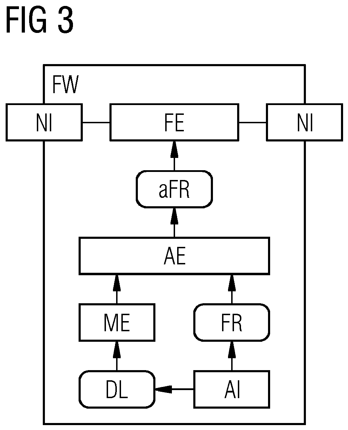

Fig. 3 zeigt eine erfindungsgemäße Komponente FW für ein Netzwerk ausgebildet als eine Firewall FW.

Über die Administrationsschnittstelle AI werden die Filterregeln FR eingerichtet, bei denen eine Filterregel FR als Filterkriterium (neben IP-/MAC-Adresse, Protokoll, Port-Nummer) zusätzlich auch angegeben werden kann, dass diese Regel FR abhängig von einem Geräte-Compliance-Status (Device Trust Status) greift (z.B. "compliant", "not compliant", "unknown").

Weiterhin kann über die Administrationsschnittstelle AI die Liste DL der Geräte eingerichtet werden, für die die Firewall FW automatisch den jeweils aktuellen Geräte-Compliance-Status ermittelt und lokal vorhält (z.B. durch Abfrage von einem Geräteverzeichnisdienst oder durch eine eigenständige Überprüfung). Die Firewall FW ermittelt im laufenden Betrieb durch eine Monitoring-Einheit ME wiederholt, z.B. stündlich oder täglich, den aktuellen Geräte-Compliance-Status der in der Liste DL enthaltenen Geräte und bildet durch eine Adaptionseinheit AE davon abhängig die aktuell aktiven Filterregeln aFR (bzw. passt die Filterregeln davon abhängig durch die Adaptionseinheit AE an), die durch die Filter-Engine FE beim Weiterleiten von Datenpaketen zwischen den Netzwerkschnittstellen NI zur Anwendung kommen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Bereitstellen mindestens einer Filterregel (aFR) für ein Filtern eines Netzwerkverkehrs zwischen mindestens einem ersten Knoten (1) und mindestens einem zweiten Knoten (2) einer Kommunikationsverbindung,
mit den Schritten:
- Ein Heranziehen (S2) mindestens eines Konformitätsstatus des ersten Knotens (1) und/oder des zweiten Knotens (2),
- ein Festlegen (S3) der mindestens einer Filterregel (aFR) basierend auf dem mindestens einem Konformitätsstatus, wobei das Festlegen (S3) der mindestens einen Filterregel (aFR) umfasst:
o Ein Anpassen (S3a) mindestens einer bestehenden Filterregel (FR),
und
- das Bereitstellen (S4) der mindestens einen Filterregel (aFR).

2. Verfahren nach Anspruch 1,
mit den weiteren Schritten:
- Ein Ermitteln (S1b) des mindestens einen Konformitätsstatus,
- ein Speichern (S1c) des mindestens einen Konformitätsstatus, und/oder
- ein Abrufen (S1d) des mindestens einen Konformitätsstatus.

3. Verfahren nach Anspruch 2,
wobei das Ermitteln (S1b) des mindestens einen Konformitätsstatus auf:
- Einem Abrufen mindestens eines Verzeichniseintrags (DL) bezüglich des mindestens einen Konformitätsstatus,
- mindestens einer Integritätsattestierung des mindestens einen ersten Knotens (1) und/oder des mindestens einen zweiten Knotens (2), und/oder
- mindestens einem Fingerabdruck des mindestens einen ersten Knotens (1) und/oder des mindestens einen zweiten Knotens (2)
basiert.

4. Verfahren nach einem der vorhergehenden Ansprüche,
mit den weiteren Schritten:
- Ein Heranziehen (S5a) der mindestens einen Filterregel (aFR), und
- ein Filtern (S5b) des Netzwerkverkehrs zwischen dem ersten Knoten (1) und dem zweiten (2) Knoten der Kommunikationsverbindung unter Anwendung der mindestens einen Filterregel (aFR).

5. Verfahren nach einem der vorhergehenden Ansprüche,
wobei dem Heranziehen (S2) des mindestens einen Konformitätsstatus vorausgeht:
- ein Heranziehen (S1a) einer Benachrichtigung bezüglich einer Änderung von mindestens einem früheren Konformitätsstatus des ersten Knoten (1) und/oder des zweiten Knotens (2).

6. Verfahren nach einem der vorhergehenden Ansprüche,
wobei das Festlegen (S3) der mindestens einen Filterregel (aFR) außerdem umfasst:
- Ein Festlegen (S3b) einer Überwachungsintensität der Kommunikationsverbindung durch die mindestens eine Filterregel (aFR).

7. Verfahren nach einem der vorhergehenden Ansprüche,
wobei der Netzwerkverkehr aufweist:
- mindestens ein Netzwerkpaket,
- mindestens ein Datenpaket,
- mindestens ein IP-Paket, und/oder
- mindestens einen Ethernet-Frame.

8. Verfahren nach einem der vorhergehenden Ansprüche,
wobei die mindestens eine Filterregel (aFR):
- Eine Blockade,
- ein Weiterleiten,
- ein Umleiten, und/oder
- ein Zuordnen zu einer Wartschlange
für zumindest einen Teil des Netzwerkverkehrs vorgibt.

9. Verfahren nach einem der vorhergehenden Ansprüche,
wobei der mindestens eine erste Knoten (1) und/oder der mindestens eine zweite Knoten (2) ausgebildet ist als:
- ein Endpunkt (1, 2) einer Ende-zu-Ende-Kommunikationsverbindung, insbesondere ein Kommunikationsendpunkt und/oder
- ein Endgerät (1, 2).

10. Verfahren nach einem der vorhergehenden Ansprüche,
wobei der mindestens eine erste Knoten (1) und/oder der mindestens eine zweite Knoten (2) ausgebildet ist als:
- ein Internet-of-Things-Gerät,
- ein Steuergerät,
- ein Automatisierungsgerät, und/oder
- eine Produktionszelle.

11. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 10 ausgeführt werden, wenn das Computerprogramm auf der Recheneinheit ausgeführt wird.

12. Komponente (FR) für ein Netzwerk,
aufweisend ein Computerprogrammprodukt nach Anspruch 11, ausgebildet das Computerprogramm auszuführen.

13. Komponente (FR) nach Anspruch 12,
ausgebildet als:
- eine Firewall (FR), ein Paketfilter, ein Router und/oder ein Switch oder
- eine Verwaltungskomponente, ausgebildet eine weitere Komponente für ein Netzwerk zu verwalten.

14. Übergeordnetes System,
aufweisend:
- Ein erstes Endgerät (1),
- ein zweites Endgerät (2),
- ein Netzwerk (CN), und
- eine Komponente (FR) nach Anspruch 12 oder 13.
